# EUROPEAN PATENT APPLICATION

(11) **EP 3 031 553 A1**
(43) Date of publication of application: **15.06.2016**
(21) Application number: 15196492.1
(22) Date of filing: 26.11.2015
(51) Int. Cl.: B23B 1/00, B23B 25/04, B23Q 11/08

(54) **LIGHTED GUARD FOR TOOL REST**

(30) Priority: 08.12.2014 US 201462088851 P; 25.11.2015 US 201514951757
(71) Applicant: JPW Industries Inc., La Vergne, TN 37086-4184 (US)
(72) Inventor: GARDNER, Martin, Franklin, TN Tennessee 37607 (US); WEBER, Charles, Onalaska, WI Wisconsin 54650 (US); CARLSON, Benjamin, Holmen, WI Wisconsin 54636 (US)
(74) Representative: Lawrence, John

(57) **Abstract**

A lathe or other rotating machine (10) includes a tool rest (24) on a carriage (18) that is movable along the work piece. The carriage (18) includes a post (30) that is movable with the tool rest (24). The post (30) supports a guard (28) that is disposed between the user and the work piece. The guard (28) may include a frame (44) surrounding a transparent portion (46). The frame (44) may support a plurality of light emitting elements (60) directed onto the work piece. An extendable/retractable transparent portion (50) may be extended from the guard (28) between the user and the work piece. The extendable/retractable portion (50) and/or the transparent portion (46) may be a magnifier.

## Description

### CROSS-REFERENCE TO RELATED APPLICATION

The present application claims the benefit of United States Provisional Patent Application Serial No. 62/088,851, filed December 8, 2014, which is incorporated herein by reference.

### BACKGROUND

### Field

The present invention relates generally to a lathe or other rotating machine and, more particularly, to a guard for a lathe or other rotating machine.

### Description of the Related Art

A lathe is a machine that holds a work piece from one or both ends and that operates to rotate the work piece so that the work piece can be shaped or otherwise worked. Tools, such as cutting and shaping tools, are moved into contact with the rotating work piece to shape the work piece, a process referred to as "turning" the work piece. A lathe is commonly used to form or work spindles, table legs, chair legs, baseball bats, and other rotationally formed parts that are held in the lathe from both ends. A lathe may also be used to machine brake rotors and brake drums for vehicles, crank shafts, or to hone or machine barrels, drums, wheels, bolts, or shafts. A lathe may be used to form bowls, vases, cups, or the like by mounting the work piece so that it is held in the lathe by a single end of the work piece.

Lathes may be used to shape wood, metal, or other materials. The work piece to be shaped is supported in the lathe by a chuck that is connected to a lathe motor which operates to rotate the chuck and any work piece that is held by the chuck. The work piece is engaged in the chuck by adjusting the chuck to engage the work piece so that the work piece may be shaped, and the work piece is released from the chuck by adjusting the chuck so that the shaped work piece may be removed from the lathe. For work pieces that are held in the lathe at both ends, a tail piece holds the work piece at the opposite end from the chuck. A lathe typically includes a tool rest or tool holder on which tools, such as cutting, abrading or other shaping tools, are positioned and supported for contact with the rotating work piece.

Tool rests may be provided on lathes of various types, on grinders, sanders, planers, saws, drills, drill presses, and on other machines for holding either tools or for holding the work piece itself during use of the machine.

### SUMMARY OF THE INVENTION

Certain embodiments of the present invention provide a guard that may be selectively positioned between a user and an operating part of a machine. The machine may be a rotating machine and the operating part may include a tool rest for supporting a tool or a work piece for use with the rotating machine. The operating part may instead be a cutting, shaping, or abrading tool or other tool of the machine or tool for use with the machine. The guard preferably includes a transparent portion so that the user may view the work piece or tool through the transparent portion as the work piece is worked by the tool. The guard of certain embodiments includes one or more lights that are directed onto the work piece to provide illumination of the work piece and/or the tool during the shaping or other working operation. In certain embodiments, the lights are mounted at a portion of the guard that is directed toward the work piece.

The guard may include an extendable member that has a transparent portion and that may be moved to an extended position so as to be disposed between the user and the work piece. The extendable member may be moved to a retracted position as desired by the user, for example, to provide access to the work piece. In certain embodiments, a magnifier is provided on the guard. The magnifier may be in a position to provide a magnified view of the work piece to the user.

In certain embodiments, the machine is a lathe. The guard may be provided on a post or other support that extends from a carriage of the lathe. The carriage supports the tool rest and is operable to move to different positions along the work piece as different tool rest positions are needed during use of the lathe. The guard moves with the tool rest as the carriage is moved. The post or other support is adjustable relative to the carriage, for example, to move the guard closer to or further from the work piece.

### BRIEF DESCRIPTION OF THE DRAWINGS

**Figure 1** is a perspective view of a lathe of one configuration that may be provided with the lighted guard for tool rest, although other types of lathes or other machines may be provided with the post-mounted guard as well;
**Figure 2** is a perspective view of the lathe of Figure 1 on which has been mounted a lighted guard;
**Figure 3** is a top, side perspective view of the lighted guard mounted over a tool rest of the lathe; and
**Figure 4** is a bottom, side perspective view of the lighted guard on a post.

### DETAILED DESCRIPTION OF THE PREFERRED EMBODIMENTS

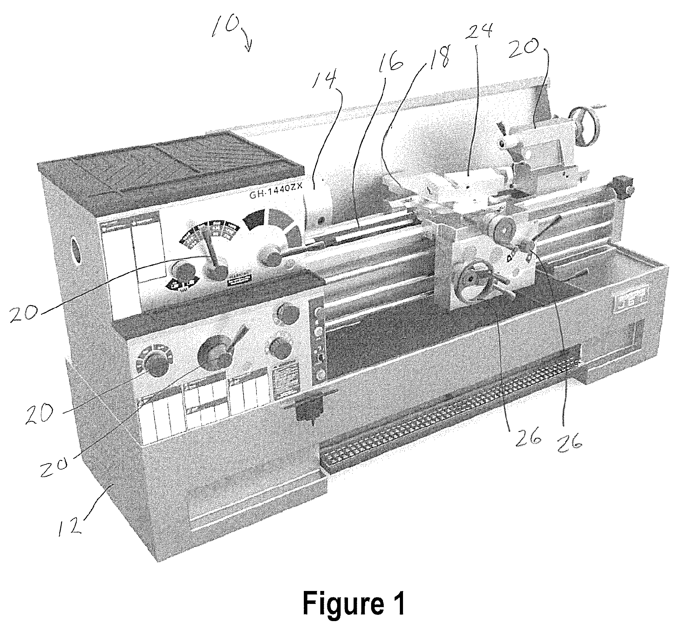

In Figure 1, a lathe 10 includes a housing 12 within which is mounted a motor (not shown) that drives a chuck or headstock 14. The chuck or headstock 14 may be used to hold a work piece as the work piece is turned or work while being rotated, for example at high speed. The lathe 10 includes a bed 16 on which is mounted a carriage 18 that may be moved along the bed 16. At the end of the bed 16 is mounted a tailstock 20 for holding the end of the work piece opposite the end held by the chuck 14. The position of the tailpiece 20 is adjustable for different lengths of work pieces. Controls 22 for the operation of the lathe 10 are provided on the housing 12. The controls 22 may permit the user to turn the motor on and off and vary the speed of the chuck 14, as well as to control other functions of the lathe. A tool rest 24 is provided on the carriage 18 for supporting tools that are used for shaping or working the work piece. The tool rest 24 may be moved along the bed 16 between the chuck 14 and the tailstock 20 so that the tool rest 24 may be positioned at each part of the work piece. Controls 26 on the carriage 18 provide for controlled movement of the carriage tool rest 24 along the work piece. The carriage 18 may either be moved manually or may be moved automatically in some embodiments.

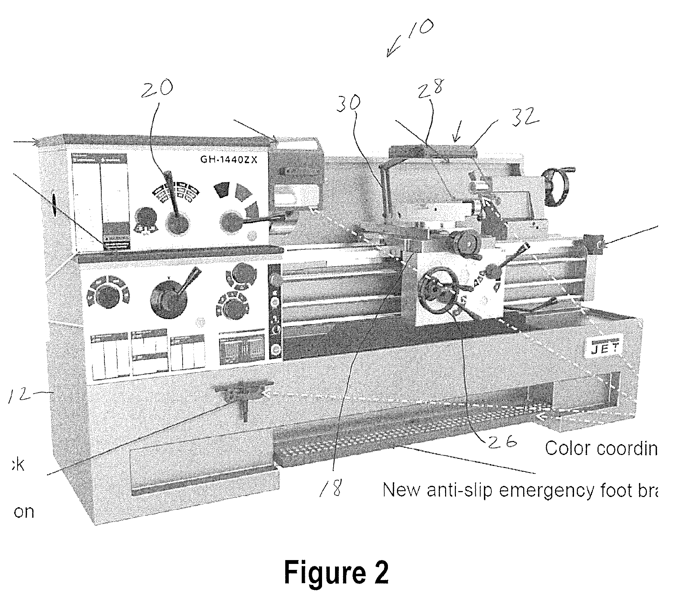

Turning to Figure 2, the lathe 10 includes a guard 28 mounted on the carriage 18. The guard 28 moves with the carriage 18 so that the guard 28 automatically moves to a new position relative to the work piece when the carriage 18 and tool rest 24 are moved to a new position. For example, the guard 28 remains over the tool rest 24 and/or over the portion of the work piece being worked or shaped as the carriage 18 and tool rest 24 are moved during shaping of the work piece. The guard 28 includes a flex arm 30, one end of which is mounted on the carriage 18 and the other end of which supports a guard head 32. The flex arm 30 is hinged generally as a location along its length and may be hinged at the connection to the carriage 18 as well as at the guard head 32 so that the flex arm 30 and guard head 32 may be moved to multiple different positions. For example, the flex arm 30 permits the guard head 32 to be moved closer to or further away from the tool rest 24 and the work piece, to be moved to different translational and angular positions depending on the size and position of the work piece, the location of the part being shaped on the work piece, the height and location of the user, personal preferences of the user, and other factors. The user may move the guard head 32 as desired.

Once the user has moved the guard head 32 to a desired position, for example a desired angle and height from the portion of the work piece being shaped, the guard head 32 may remain in the desired position relative to a different portion of the work piece as the tool rest 24 is moved to shape the different portion of the work piece. The user does not have to move or reposition the guard head 32 each time the tool rest 24 is moved. The desired position of the guard head 32 is automatically maintained during movement of the tool rest 24.

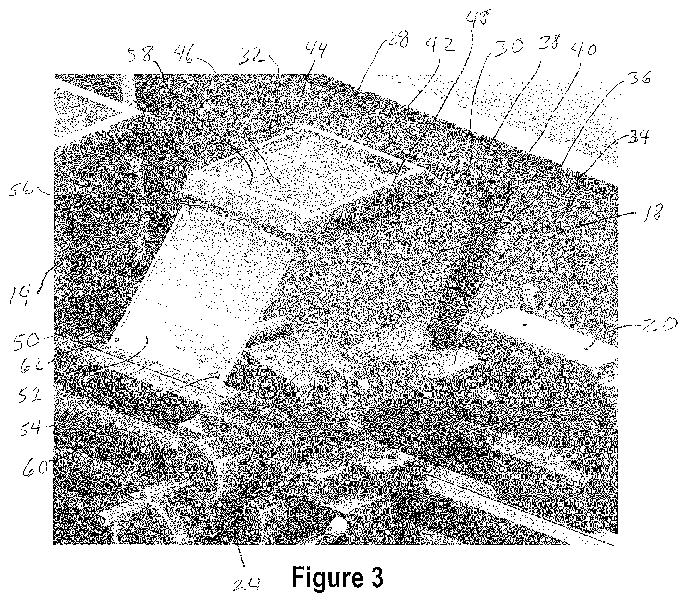

In Figure 3, the flex arm 30 has a pivot end 34 with an extension mounted in an opening in the carriage 18. The pivot end 34 flexes to permit the pivot arm 30 to move to different angular and rotational positions. The pivot arm 30 has a first segment 36 connected to the pivot end 34 and a second segment 38 connected to the first segment 36 at an elbow 40. The elbow 40 in combination with the pivot end 34 permits the guard head 32 to be raised and lowered, moved translationally, moved rotationally, or moved in a combination of translational and rotational motions to a plurality of possible positions. A wrist joint 42 connects the second segment 38 to the guard head 32, the wrist joint 42 being pivotable about a horizontal axis and in certain embodiments about additional flex axes. The pivot joints of the pivot arm 30 may be provided with hinge pins or hinge bolts or the like. Springs or other biasing elements may be provided at the joints and connected between elements joined at the respective joint to bias the joint to a predetermined position or in a predetermined direction.

The guard head 32 of the illustrated embodiment includes a frame 44 connected to the wrist joint 42. The frame 44 is rectangular in the illustrated embodiment, with a beveled outer frame portion. The frame 44 includes a central opening within which is mounted a transparent window 46. The window 46 may be of plastic, safety glass, tempered glass, other types of glass or other transparent or translucent material. The window 46 may be mounted in the frame by rubber mounting strip to resist breakage. The central opening and transparent window 46 of the illustrated embodiment are generally rectangular in shape although other shapes are possible. The flex arm 30 and frame 44 may be of the same material or of different materials, and may be formed of steel or other metal, plastic, carbon fiber, or other materials.

The transparent window 46 permits the user to examine the work piece through the window 46 while the guard head 32 is positioned between the user and the tool rest 24 and/or the work piece and/or any tool being used to shape the work piece, such as while the work piece is being shaped by tools as the lathe 10 is running. The user may watch the progress of the shaping or working of the work piece through the transparent window 46.

The transparent window 46 may have provide magnification of the view through the window 46. Alternatively, the window 46 may be configured to provide a magnified view of the work piece when the work piece is viewed through the window 46 or through a portion of the window 46. For example, the window 46 may include a magnifying portion and a non-magnifying portion. The magnifying window or magnifying portion may be provided by a convex lens or by a Fresnel lens, for example, that is provided as the magnifying portion of the window or that is provided over, under, or within the window 46. The magnifying window or magnifying portion may be permanently fixed in the window 46 or may be removable and/or selectable.

The transparent window 46 is shown as a rectangle window, although other shapes are of course possible. Similarly, the frame 44 is a rectangle in the illustration with a beveled outer frame shape, but other shapes are possible.

The frame 44 of certain embodiments may have a handle 48 mounted in a position so that a user may grasp the handle 48 and move the guard head 32 about. The handle 48 of the illustrated embodiment extends from the side of the frame 44. Another similar handle may be provided on the opposite side of the fame 44. One or several handles may be provided on the frame 44 positioned and shaped as desired. Once the frame 44 is moved to a desired position using the handle 48, for example, the flex arm 30 may have sufficient tension on the joints, for example, that the guard head 32 stays in the desired position. It is also foreseen that a tightening mechanism may be provided to permit the user to tighten any flexure points to retain the guard head 32 in position. Bolts that may be tightened and loosened using tools or by hand may be provided. Any known means for forming the flex arm 30 and its flexure points are within the scope of the invention.

As an optional feature, the guard head 32 includes an extendable shield 50. The extendable shield 50 of the illustrated embodiment includes a transparent panel 52 enclosed within a thin frame 54. In the illustration, the extendable shield 50 is positioned at an angle to the frame 44 of the guard head 32. In particular, the guard head 32 is shown in a generally horizontal position over the tool rest 24. The extendable shield 50 is at an angle of about 30 to 50 degrees from the position of the guard head 32, although other angles are of course possible. The extendable shield 50 may be moved to different angles in certain embodiments.

The extendable shield 50 of certain embodiments is mounted in a slot 56 in the frame 44. The slot 56 connects to channels 58 that extend along the opposite sides of the frame 44 within the inside of the frame 44. The extendable shield 50 includes laterally extending pegs that extend into the channels 58 and that slide along the channels 58 when the extendable shield 50 is moved to a retracted position. The channels 58 are of a size and shape to fully receive the extendable shield 50, in certain embodiments. The pegs keep the extendable shield from being removed from the slot 56 at the extended position, and in some embodiments permit the extendable shield to tilt at an angle. If the user desires to move the extendable shield to the retracted position, the user may lift the extendable shield 50 so that it is generally parallel with the frame 44 and push inward to slide the extendable shield 50 into the channels 58, much like pushing a drawer into a desk.

The channels 58 may be provided with springs or other biasing means to exert a retaining force on the pegs or other portions of the extendable shield 50 to maintain the shield 50 at positions between the retracted position and the extended position. The sliding extendable shield 50 may require that the user exert an extending or retracting force to overcome the retaining force and move the shield.

Cushioning pads 60 may be provided on the extendable shield 50 to cushion vibration from being transmitted between the frame 44 and extendable shield 50. In certain embodiments, the extendable shield 50 includes one or more grasping portions that may be grasped by a user to, for example, extract the shield 50 from the retracted position. The extendable shield 50 may include a transparent window of non-magnifying material or may be formed of magnifying material to provide a magnified view of the work piece to the user.

In the retracted position, the transparent panel of the extendable shield 50 be disposed parallel to the transparent window 46 of the guard head 32. The parallel positioning of the transparent portions may provide various functions. If both the transparent window 46 of the frame 44 and the transparent panel 52 of the extendable shield 50 are formed of magnifying material, the two windows may be configured so that the magnification is increased by moving the extendable window 50 into the retracted position and viewing the work piece through both windows while they are aligned in the frame 44. Multiple magnifications may thus be provided. Another possibility is that each of the panel and window 52 and 46 are of polarizing material so that optical characteristics of the work piece may be examined by the aligned polarizing layers. Tinted windows or other characteristics are also possible.

The window 52 of the extendable shield 50 may be of glass, shatterproof glass, plastic, or other materials. In certain embodiments, the windows 46 and 52 are of scratch resistant material and/or may have coatings, layers, or structures as desired. Markings such as engravings or printings may be provided on one or both windows for alignment, measurement, proportion, tool identification, or other uses.

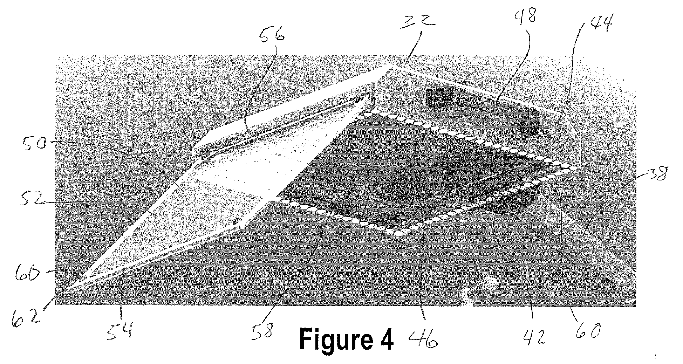

With reference now to Figure 4, the frame 44 has the handle 48 on one side. A similar handle may be provided on the other side in some embodiments. The extendable shield 50 extends from the slot 56 at an angle so that it may be positioned between the work piece and the user. The channel 58 into which the extendable shield 50 may be slid is apparent within the frame 44.

The frame 44 of the certain embodiments includes at least one light 60 mounted to direct light onto the work piece. The light 60 may be formed as an integral part of the frame 44 or may be affixed thereto or mounted independently of the frame 44. The light 60 may be of any type, including light emitting diode (LED), plasma, liquid crystal display (LCD), incandescent, fluorescent, or other lighting type.

The illustrate frame 44 includes a plurality of LED lights 60 mounted in the frame 44 extending in a row along each of the four sides. Other arrangements of lights are also possible. By providing a substantial number of LED lights 60, the work area is illuminated without shadows and with even illumination, all without drawing significant amounts of power. The LED lights 60 may be of the same emission spectrum or may be mix of LEDs of different emission spectrums. A light switch, dimmer, and/or emission spectrum changer may be provided on the guard head 32, on the flex arm 30, and/or on the lathe 10. The lights 60 may be mounted so as to be replaceable by a user, for example to change the light spectrum or the like, or the light may be mounted permanently in the frame 44.

The emission spectrum of the lights 60 may be coordinated with coatings or the like of the windows to provide particular lighting effects when viewed through the windows of the guard head 32.

The user is provided with an adjustable position guard that may be moved to between the user and the work piece and that includes transparent windows so that the work piece can be viewed as it is being worked. The adjustable guard may include one or more extendable portions to increase or decrease the size of the guard. The guard may include a magnifier for improving the view by the user. Lights may be provided on the guard for direct lighting on the work area of the work piece. Some or all of these features may be provided in embodiments according to the present invention.

Guards, which may be associated with tool rests or not, may be provided on lathes of various types, on grinders, sanders, planers, saws, and on other machines or tools.

The guards may be mounted on or for movement with a tool rest or may be mounted separate from the tool rests, which may be provided to position a tool or work piece during use of the machine.

Thus, there is shown and described a lathe or other rotating machine that includes a tool rest on a carriage that is movable along the work piece. The carriage includes a post that is movable with the tool rest. The post supports a guard that is disposed between the user and the work piece. The guard may include a frame surrounding a transparent portion. The frame may support a plurality of light emitting elements directed onto the work piece. An extendable/retractable transparent portion may be extended from the guard between the user and the work piece. The extendable/retractable portion and/or the transparent portion may be a magnifier.

Although other modifications and changes may be suggested by those skilled in the art, it is the intention of the inventors to embody within the patent warranted hereon all changes and modifications as reasonably and properly come within the scope of their contribution to the art.

## Claims

1. A rotating machine (10), comprising:
a motor that is operable for rotational motion;
a chuck (14) connected for rotation by the motor, the chuck (14) being operable to hold a work piece;
a bed (16) disposed adjacent a work piece held in the chuck (14);
a carriage (18) moveable along the bed (16), the carriage (18) including a tool rest (24);
a post (30) mounted on the carriage (18) for movement with the carriage (18);
a guard (28) mounted on the post (30), the guard (28) including a transparent portion (46);
a light disposed on the guard (28) and directed to illuminate at least a portion of the work piece;
the transparent portion (46) of the guard (28) being disposed to provide a view of the illuminated portion of the work piece through the transparent portion (46).

2. A rotating machine (10) as claimed in claim 1, wherein the light includes a plurality of light emitting elements (60) disposed at a plurality of locations on a work piece directed surface of the guard (28).

3. A rotating machine (10) as claimed in claim 1 or claim 2, wherein the transparent portion (46) of the guard (28) is surrounded by a frame (44), the light including a plurality of light emitting elements (60) mounted at the frame (44).

4. A rotating machine (10) as claimed in claim 1 or claim 2 or claim 3, further comprising:
an extendable/retractable guard portion (50) mounted to be selectively extended from the guard (28).

5. A rotating machine (10) as claimed in claim 4, wherein the extendable/retractable guard portion (50) includes a transparent magnifying portion.

6. A guard (28) adapted for use on a machine, comprising:
a guard head (32) including a frame (44) and a transparent window (46) mounted in the frame (44), the frame (44) extending about a perimeter of the transparent window (46), the guard head (32) including a tool side facing in a direction perpendicular to the transparent window (46);
a plurality of lights (60) mounted in the tool side of the frame (44); and
a flexible mounting post (30) having a first end connected to the guard head (32) and a second opposite end adapted for mounting to the machine so that when the guard head (32) is so mounted the plurality of lights (60) is directed toward the machine.

7. A guard (28) as claimed in claim 6, wherein the frame (44) is generally rectangular and includes first and second channels (58) along opposite sides of the generally rectangular frame (44).

8. A guard (28) as claimed in claim 7, further comprising:
an extendable shield (50) slidably mounted in the first and second channels (58) for movement between an extended position extending from the frame (44) and a retracted position within the frame (44).

9. A guard (28) as claimed in claim 8, wherein the extendable shield (50) includes a transparent panel (52), the transparent panel (52) being positioned in the frame (44) so that light passes through both the transparent panel (52) of the extendable shield (50) and through the transparent window (46) of the guard head (32) when the extendable shield (50) is in the retracted position so that a user may view a work piece by viewing through both of the transparent window (46) and the transparent panel (52).

10. A guard (28) as claimed in claim 6 or any of claims 7 to 9, further comprising:
at least one handle (48) extending from the frame (44) by which a user may move guard head (32) and the flexible mounting post (30) from a first position to a second different position.

11. A guard (28) as claimed in claim 6 or any of claims 7 to 10, wherein the transparent window (46) includes a magnifier.

12. A guard (28) as claimed in claim 6 or any of claims 7 to 11, further comprising:
a tool rest (24) having a tool supporting surface, the tool rest (24) being configured for movement between a plurality of tool supporting positions, the flexible mounting post (30) being mounted for movement with the tool rest (24).

13. A method for shielding a user while using a lathe (10), comprising:
mounting a guard (28) on a carriage (18) of the lathe (10) that holds a tool rest (24);
lighting the tool rest (24) by lights (60) on the guard (28);
transmitting a view of the lighted tool rest (24) through the guard (28); and
automatically moving the guard (28) from a first guard position to a second guard position when the carriage (18) holding the tool rest (24) is moved from a first tool rest position to a second tool rest position.

14. A method as claimed in claim 13, further comprising:
slidably receiving an extendable shield (50) in the guard (28) so that the extendable shield (50) is movable between a retracted position in the guard (28) and an extended position extending from the guard (28).

15. A method as claimed in claim 13 or claim 14, further comprising:
magnifying a view of the tool rest (24).
